# EUROPEAN PATENT APPLICATION

(11) **EP 4 018 885 A1**
(43) Date of publication of application: **29.06.2022**
(21) Application number: 20217195.5
(22) Date of filing: 24.12.2020
(51) Int. Cl.: A47J 27/04, A47J 37/06, F24C 15/32

(54) **STEAM COOKING APPARATUS**

(71) Applicant: Koninklijke Philips N.V., 5656 AG Eindhoven (NL)
(72) Inventor: MURBACHER, Werner Karl, 5656 AE Eindhoven (NL); SCHRETTLINGER, Joachim, 5656 AE Eindhoven (NL)
(74) Representative: de Vries, Janna

(57) **Abstract**

A cooking apparatus has a cooking chamber and a heating chamber adjacent the cooking chamber used for heating air laden with steam. Air and steam is circulated between the cooking chamber and the heating chamber, through a vent arrangement. A food support is provided for mounting in the cooking chamber, having at least perforated basket and a lid plate for mounting over the basket. This enables two different cooking characteristics, at different height in the cooking chamber.

## Description

### FIELD OF THE INVENTION

This invention relates to a steam cooker, also referred to as a steamer.

### BACKGROUND OF THE INVENTION

Steam cooking (also referred to as steaming) is commonly known as one of the healthiest cooking methods. In particular, steam cooking is often preferred over other cooking methods such as boiling, frying and baking because it results in a lower amount of nutrient destruction.

This is because steam cooking generally operates at a lower temperature, typically below 100 degrees Celsius, but nevertheless enables short cooking times due to the wet steam environment. The presence of water as the cooking medium causes a leaching out of water soluble nutrients when boiling, and this is greatly reduced by steam cooking.

A traditional steamer comprises a pan for placing over the hob of a cooker, in which water is boiled. Food to be steamed is mounted over the pan in trays having perforated bases.

Steam cookers are now well known and comprise a steam cooking chamber around which hot air and steam are circulated by a fan. The steam cooker is for example a top-loaded device, rather than a more conventional steam oven with a front door.

Steam is introduced into the cooking chamber, either from an external steam source or else generated internally within the cooking chamber for example by using a vaporizer at the bottom of the cooking chamber. A heating chamber adjacent to the cooking chamber comprises a fan and a heater to generate a circulatory flow of hot air and steam. The steam generation may take place in the heating chamber instead of in the cooking chamber.

The heating chamber is a closed unit next to the main cooking chamber, but it has at least one opening for air intake from the cooking chamber and at least one opening for air delivery into the cooking chamber.

It is often desirable to cook different types of food at the same time, for example on different shelves in an oven. However, a steam cooking apparatus typically does not allow this separation of foods into different areas.

### SUMMARY OF THE INVENTION

The invention is defined by the claims.

According to examples in accordance with an aspect of the invention, there is provided a steam cooking apparatus, comprising:
a cooking chamber;
a steam generator for generating steam to be provided to the cooking chamber;
a heating chamber adjacent the cooking chamber;
a heating arrangement located within the heating chamber for heating air laden with steam;
a vent arrangement between the cooking chamber and the heating chamber to allow a circulatory flow of steam laden air between the heating chamber and the cooking chamber; and
a food support for mounting in the cooking chamber, wherein the food support comprises:
   a basket having perforated sides to allow air to flow through the basket, for containing first food items to be cooked; and
   a plate for mounting over the basket, wherein the plate is for supporting second food items to be cooked.

This cooking apparatus has a food support which enables different food items to be at two different levels, namely in the basket and over the top of the basket on the lid plate. The different heights give rise to different air flow conditions, so that different cooking effects may be selected. The basket is perforated and that at least side walls have openings to allow air to pass through.

The apparatus for example comprises a fan for generating the circulatory flow, and the fan is for example in the heating chamber.

The food support may further comprise a base on which the basket can be mounted. The different parts of the food support are then preferably all supported by the base, so that they are easy to remove together from the cooking chamber. The different parts for example simply sit over each other with no tracks, protrusions or the like so that the parts are easy to clean and the cooking chamber remains easy to clean. The food support for example sits in the cooking chamber with feet (of the base) which simply sit on the base of the cooking chamber.

The air flow around the cooking chamber is defined by the characteristics of the circulation system including a fan motor speed and fan dimensions.

The base may comprise a capture tray and a support tray mounted spaced over the capture tray. The capture tray for example catches dripping oil from the cooking food items and thus reduces the dirtying of the cooking chamber. The capture tray may be removed from the cooking chamber together with all other parts of the food support. It is easy to handle by the user and is easy to clean. The different parts of the food support can be cleaned by a dishwasher. The support tray may be used to support food items directly or it may support the basket or indeed other components.

The food support may further comprise a non-perforated pot for mounting directly on the base or within the basket. This enables cooking of different types of food, such as liquids. The lid plate may function as a lid for the cooking pot.

For some cooking recipes, the pot will be used instead of the basket. It may rest directly on the base but it could instead have a handle to mount it to a support and thus be suspended above the base.

The pot may fit in the basket to save space for storage. The pot could also be put into the basket during cooking. The basket could instead fit in the pot for storage.

The food support may be configurable in different ways, for example with:
only the base (for cooking only first food items directly on the base);
only the base and basket (for cooking only first food items in the basket);
only the base and top plate (for cooking only second food items or first and second food items);
only the base and pot (for cooking only liquid first food items with an open pot);
the base, pot and top plate (for cooking liquid first food items in a closed pot and optionally second food items).

The steam generator may comprise a water reservoir and a steam heater for heating water from the water reservoir to generate steam. The steam heater is for example in the cooking chamber. In such a case, the base may then be for mounting above the steam heater. Thus, it is mounted over a steam generating region of the cooking apparatus. The space between the base and the steam heater thus forms a funnel or channel along which the generated steam can flow.

The basket is for example formed as a mesh. This allows the flow of heated steam and air to pass through the sides of the basket to the first food items.

The food support for example further comprises a handle arrangement for lifting the food support in and out of the cooking chamber. The handle arrangement is for example retractable, so that it is easy to handle the food support and but the handles can move out of the way when the food support is mounted in the cooking chamber. The retraction of the handles may be implemented by a lid of the cooking apparatus.

The lid plate for example also has handles to enable lifting of the lid plate off the remainder of the food support.

The cooking chamber for example comprises a base, a rear wall area and a front wall area, wherein the vent arrangement comprises an extraction vent in the rear wall area through which air is drawn from inside the cooking chamber, and a delivery vent in the rear wall area for delivering air to the cooking chamber.

Thus, there is a circulatory flow around the heating chamber and the cooking chamber through the two vents.

The extraction vent is for example located in a middle region of the rear wall area and this may lead directly to a fan, and the delivery vent is located at a top region of the rear wall area above the extraction vent.

By providing the delivery vent at the top of the rear wall area, above the extraction vent, a circulatory flow is generated which passes along a top of the cooking chamber (i.e. under a lid of the apparatus). In this way, the lid is heated with a continuous flow, thereby reducing condensation on the lid to prevent steaming up of the viewing window formed by the transparent lid. This flow is between the top of the food support and the underside of the lid, and this space provides additional control of the low conditions near the lid.

The top of the lid plate, when the food support is mounted in the cooking chamber, is preferably below the bottom of the delivery vent. Thus, the delivery of hot air and steam is not impeded by the food support.

The top of the lid plate is for example spaced by at least 15mm below the bottom of the delivery vent, for example by at least 20mm and possibly by more than 30mm, for example up to 50mm.

The cooking apparatus preferably comprises a transparent lid which is inclined downwardly from the rear wall area towards the front wall area.

The term "transparent lid" should be understood as meaning the whole lid if it is entirely transparent, or just the transparent portion if the lid has a transparent window and a significant non-transparent frame. The transparent lid enables inspection of the food during cooking.

By inclining the lid downwardly from the rear wall area towards the front wall area, the design prevents condensation of steam at the transparent section of the lid via heating. The transparent lid is preferably openable and is thus used both for inserting and removing food and for inspection during cooking.

The apparatus preferably comprises a controller adapted to control the steam heater to heat water from the water reservoir to create steam. A water dosing system is preferably also provided for delivering water to the heating arrangement.

A continuous or pulsed delivery of water and a cyclic control of the heating arrangement may for example be used to maintain a cooking temperature in a desired range. A feed arrangement is for example provided to feed water from the water reservoir into contact with a heated surface of the steam heater. This surface is then used to induce evaporation.

The invention also provides a food support for use as the food support of the steam cooking apparatus as defined above, for mounting in the cooking chamber of the steam cooking apparatus, wherein the food support comprises:
a basket for mounting over the base, the basket having perforated sides to allowing air to flow through, the basket for containing first food items to be cooked; and
a lid plate for mounting over the basket, wherein the lid plate for supporting second items to be cooked.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a known cooking apparatus;
Figure 2 shows the cooking chamber opened up to show the rear wall area and the first and second side wall areas; and
Figure 3 shows a simplified diagram of the cooking apparatus including a first example of a food support and showing the flow paths;
Figure 4 shows a perspective view of the food support;
Figure 5 shows the food support of Figure 4 in exploded view;
Figure 6 shows some possible configurations of the food support;
Figure 7 shows the combination of the base, basket and lid plate;
Figure 8 shows the combination of the base, basket, lid plate and the pot;
Figure 9 shows a channeled base supporting the basket;
Figure 10 shows that the base and the lid plate may be used without the basket;
Figure 11 shows a view of the food support and the rear wall area;
Figure 12 shows a second example of a food support;
Figure 13 shows the food support of Figure 12 with the different parts separated;
Figure 14 shows a first possible arrangement for the handles of the food support;
Figure 15 shows a second possible arrangement for the handles of the food support; and
Figure 16 shows example dimensions for the food support of Figure 12.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a cooking apparatus which has a cooking chamber and a heating chamber adjacent the cooking chamber used for heating air laden with steam. Air and steam is circulated between the cooking chamber and the heating chamber, through a vent arrangement. A food support is provided for mounting in the cooking chamber, having at least perforated basket and a lid plate for mounting over the basket. This enables two different cooking characteristics, at different height in the cooking chamber.

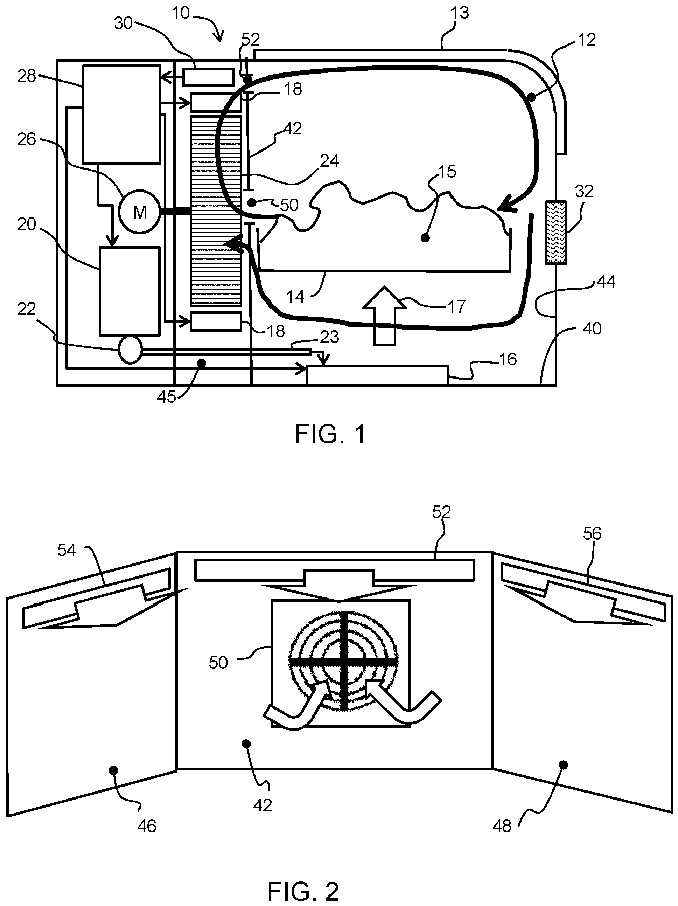

Figure 1 shows a known cooking apparatus 10, in particular as disclosed in WO 2020/148187.

The cooking apparatus comprising a cooking chamber 12 (i.e. a food chamber in which food to be cooked is placed) in which a food basket 14 is mounted. The cooking chamber has a viewing window 13 which may also be the openable lid of the apparatus. Food 15 to be cooked is placed on the food basket which then places the food near the center of the cooking chamber. The food basket has air permeable side walls and optionally an air permeable base so that air and steam can circulate through the basket to the food.

There is a heating arrangement which in this example comprises a first heater 16 for generating steam and a second heater 18 for heating air laden with steam. The first heater is used to generate steam (shown as arrow 17) from water which is delivered from a water reservoir 20 by a dosing system 22. The dosing system provides water to a feed arrangement 23 which delivers water to a surface of the first heater 16 to generate steam.

The dosing system may deliver a constant flow of water during cooking or a regularly pulsed delivery of water (so needing no feedback control), but it could also be controlled dynamically during cooking using feedback from a humidity sensor.

A circulation system is provided in the form of a fan 24 and motor 26. The circulation system circulates the steam generated by the first heater 16 around the cooking chamber. The second heater 18 is along the circulation path and thereby further heats the steam to create a high temperature dry steam environment. The circulation system thus moves the saturated air inside the chamber to the food to increase convection and also assists in producing a homogeneous temperature field of all parts inside the cooking chamber, including the viewing window. This is to avoid condensation.

The apparatus is controlled by a controller 28, which controls the heating arrangement 16, 18 and optionally also the dosing system 22. The controller receives temperature information from a temperature sensor 30. The temperature of interest is the temperature at the center of the cooking chamber, where the food is located. However, the temperature sensor, which may be a negative temperature coefficient (NTC) temperature sensor, may be located anywhere in the cooking chamber, with a known correlation between the temperature at the sensor location and the temperature in the middle of the chamber.

The temperature is for example regulated by switching on and off the second heater 18 of the heating arrangement by the controller. The temperature of the first heater, for steam generation, is regulated by a thermostat again by cycling on and off. These two control mechanisms may be independent.

The cooking chamber is vented to the ambient surroundings by vents 32. Thus, the cooking chamber remains at substantially atmospheric pressure during use.

The controller 28 controls the heating arrangement to heat water from the water reservoir to create steam using the first heater 16, and to further heat the steam to create heated steam at a temperature around 100 degrees.

The second heater may further heat the steam for example to 120 degrees Celsius, or in the range 110 to 120 degrees Celsius. This approach is explained in WO 2020/0099339. Higher temperatures up to 200 degrees Celsius could be considered as well.

The circulation system circulates the heated steam around the cooking chamber. The vent or vents of the cooking chamber maintain the pressure at ambient pressure, and thus steam can escape when the maximum possible absolute humidity is reached (for the particular operating temperature), which would otherwise result in an increase in pressure.

The release mechanism provided by the vent or vents means that the steam delivery rate does not need to be controlled, and instead there can be a preset water delivery rate to the first heater 16. The controller may for example implement a control sequence which determines particular points of time when steam generation starts and/or ends. By way of example, a time-delayed start may be used for steam generation. The device is for example in a waiting mode for certain time e.g. 2 minutes from the start or else waiting until the cooking chamber temperature reaches 100 degrees Celsius. Water is then added to the first water heater 16. This pre-heating improves the avoidance of condensation at the window of the transparent lid as discussed below. The device could also have an operation mode without any steam generation.

The cooking chamber 12 comprises a base 40, a rear wall area 42, first and second opposing side wall areas and a front wall area 44. These together define a closed chamber. The rear wall area 42 defines a separation wall which separates the cooking chamber 12 from a heating chamber 45 in which (at least) the fan blades 24 and second heater 18 are housed. In the example shown, the motor 26, water reservoir 20, dosing system 22, and controller 28 are in a further chamber which is isolated from the heating chamber (i.e. there is no gas or liquid passage between them). However, there may be different components in the different chambers.

Figure 2 shows the cooking chamber opened up to show the rear wall area and the first and second side wall areas 46, 48 to show one example of vent arrangement.

The circulation system draws air out of the cooking chamber through an extraction vent 50 in the rear wall area. This vent leads to the fan blades.

A delivery vent arrangement for delivering air (and steam) comprises a first delivery vent 52 at a top region of the rear wall area above the extraction vent 50. It may extend across at least half of the width of the rear wall area, such as across more than 60%, 70% or 80% of that width.

In this example, a second delivery vent 54 is at a top region of the first side wall area 46 and a third delivery vent 56 is at a top region of the second side wall area 48.

In this known design, these vents are the only entry points for air/steam driven by the circulation system. Thus, it is possible through design of the vents and fan to control the circulation of air and steam within the cooking chamber in a reliable and repeatable way.

Note that the term wall "area" is used because the shape (from above) may not be a polygon, but instead may be a more curved shaped thus not having precisely defined sides, front and back. However, the shape (from above) is generally square or rectangular, so that corresponding front, back and sides may be readily identified. However, this does not imply that other shapes are not possible. Even a circle may be considered to have sides, a front and back by dividing it into quadrants.

The arrangement of vents shown enable a flow of the delivered air to pass over the full area of the underside of the lid 13. The viewing window area of the lid 13 has increased heat losses compared to an insulated wall so it is desirable for the window to be exposed to the flow created by the circulation system to maintain the viewing window above the dew point.

To the extent described above, the steam cooking apparatus is as described in WO 2020/148187.

The invention relates to a food support for mounting in the cooking chamber.

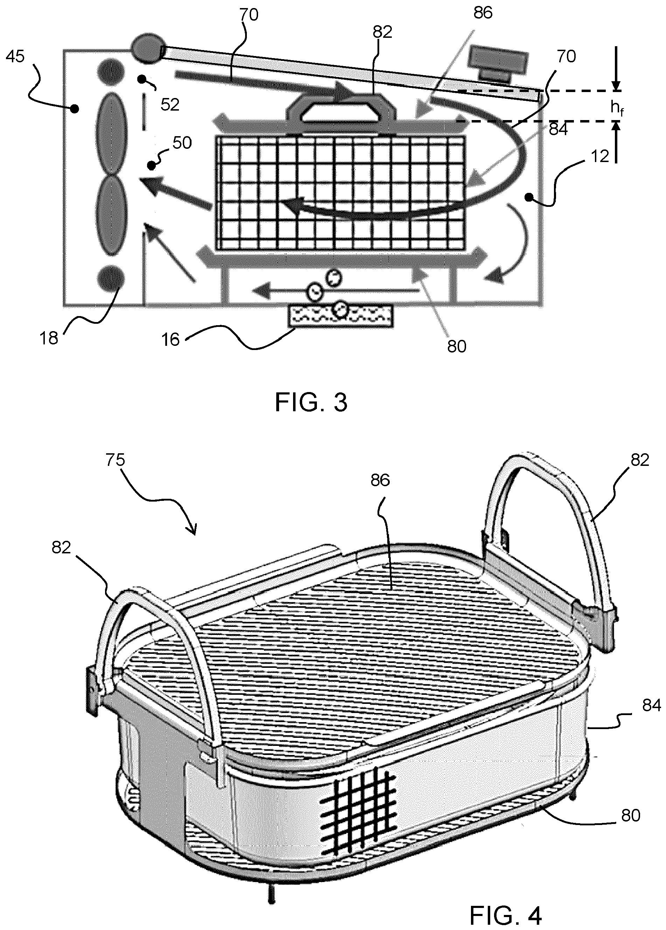

Figure 3 shows a simplified diagram of the cooking apparatus including the food support, and showing the flow paths.

It shows the cooking chamber 12, heating chamber 45, the first heater 16 (the steam heater), and the second heater 18 (for heating the air laden with steam).

The main circulatory flow is shown as 70 from the delivery vent 52 to the extraction vent 50.

The food support is for mounting in the cooking chamber 12 and comprises a base 80, a handle arrangement 82 for moving the base in and out of the cooking chamber and a basket 84 for mounting over the base.

The base 80 is for example aluminized steel (with a coating). It has feet which for example space the bottom of the base from the base of the cooking chamber by a minimum separation (excluding the feet) in the range 3mm to 30mm. The base 80 divides the airflow and thereby forms an air-guiding channel between the base 80 and the bottom of the cooking chamber 12. This supports the generation and transport of the steam to the second heater 18. The base can be used to support food directly or to hold other accessories.

The basket 84 holds bulky food and lets the air and steam pass through to effectively cook the food.

The handle arrangement 82 for example comprise spring-loaded handles, which retract when not in used.

The basket 84 has perforated sides to allow air to flow through, so that it is an air permeable support. The basket is for example formed as a pulled wire mesh frame. It for example has a volume of in the range 1.5L to 2.5L such as 2.2L. It has a height in the range 50mm to 80mm. The basket is for containing first food items to be cooked. The basket could have a perforated or a non-perforated bottom.

A lid plate 86 is mounted over the basket 84, and is for supporting second items to be cooked. The lid plate 86 is for example aluminized steel (with a coating). The top surface of the lid plate 86 may be at the same level as the top of the basket, or above the top of the basket, or it may be sunk slightly below the top of the basket. By having the surface of the lid plate 86 slightly below the level of the top of the basket, such as by 2mm, this allows a maximal height of the basket and hence a maximum volume of the basket (which is desired when cooking with only the basket), while maintaining a space between the lid plate and the transparent lid of the device at the front area of the cooking device.

As a minimum, the food support has a basket and the lid plate. The basket may for example have feet to sit directly in the cooking chamber so that a separate base is not needed.

As explained further below, the lid plate may be mounted next to the air delivery vent 52 which for example extends at least over the half of the width of the food support. In this way, food like meat is exposed to the hot air and steam directly delivered and thus obtains gentle browning. The two heaters 16, 18 both contribute to the cooking and temperature control during the cooking. The first heater 16 means that the lower layer of the cooking chamber, which is remote from the delivery vent, also has good heating performance. The food support, in particular the base, is designed taking into account the position and function of the first heater 16 in order to provide a desired flow of heated steam and air around he cooking chamber.

The food on the lid plate 86 can be observed directly through the transparent lid. After opening the lid, it is easy to interact with the second food items, for example to turn them, take them out or put them in. The lid plate 86 also acts as an air-guide to assist the flow of air and steam along the underside of the transparent lid to prevent condensation of steam.

Figure 3 also shows that the lid is inclined downwardly from the rear wall to the front wall. This further assists in preventing condensation of steam at the transparent section of the lid via heating.

Figure 4 shows a perspective view of the food support 75.

The handles 82 are spring loaded to extend up (as shown) when the lid of the steam cooker is opened. They are pushed down by the lid to retract when the lid is closed.

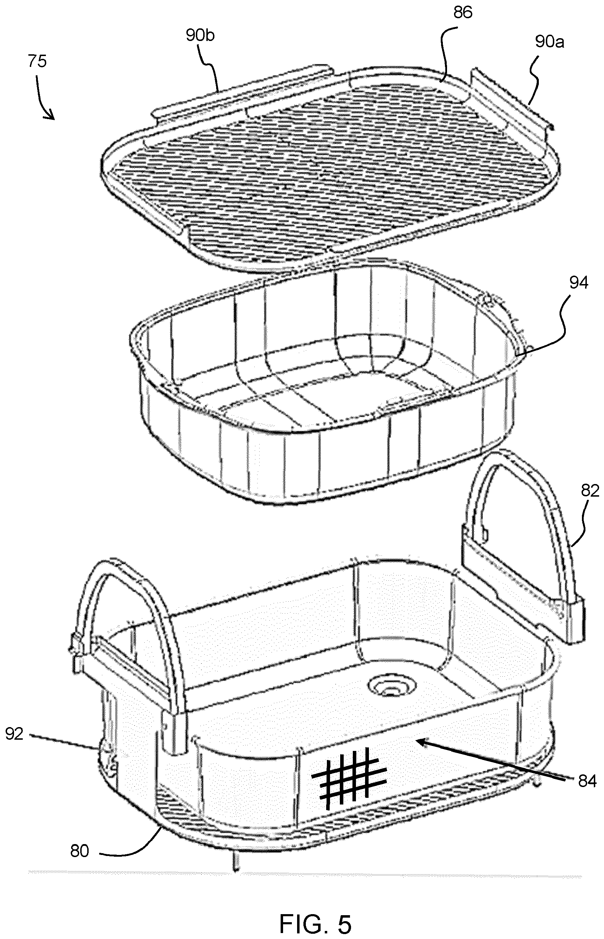

Figure 5 shows the food support of Figure 4 in exploded view.

It also shows that the lid plate 86 has supports 90a and handles 90b. The supports 90a are on a first pair of opposing sides, and they for example enable the lid plate to be mounted on mounting supports 92 of the base 80. Thus, the lid plate 86 will be lifted with the base when the base is lifted by the handles 82. The handles 90b for example enable the lid plate to be lifted by itself, leaving the components beneath in place.

The handles may also be shaped to perform an air guiding function. For example if they are oriented to face the delivery vent 52, they can be used to prevent airflow going downwards directly to the extraction vent 50.

Figure 5 also shows that the food support 75 may additionally comprise a solid pot 94 which can retain liquid food items. The pot 94 can be received within the basket 84 and this saves storage space. The pot has an open top, but the lid plate can function as lid for the pot or the basket, either to close the pot or the basket or to enable second food items to be placed on top. The pot can thus be stored in the basket. The basket may instead fit in the pot for storage.

The food support may be configurable in different ways, for example with:
only the base 80 (for cooking only first food items which can sit directly on the base);
only the base and basket (for cooking only first food items which are to be retained in a basket);
only the base and top plate (for cooking first and second food items or for cooking only second food items);
only the base and pot (for cooking only liquid first food items with an open pot);
the base, pot and top plate (for cooking liquid first food items in a closed pot and optionally also second food items).

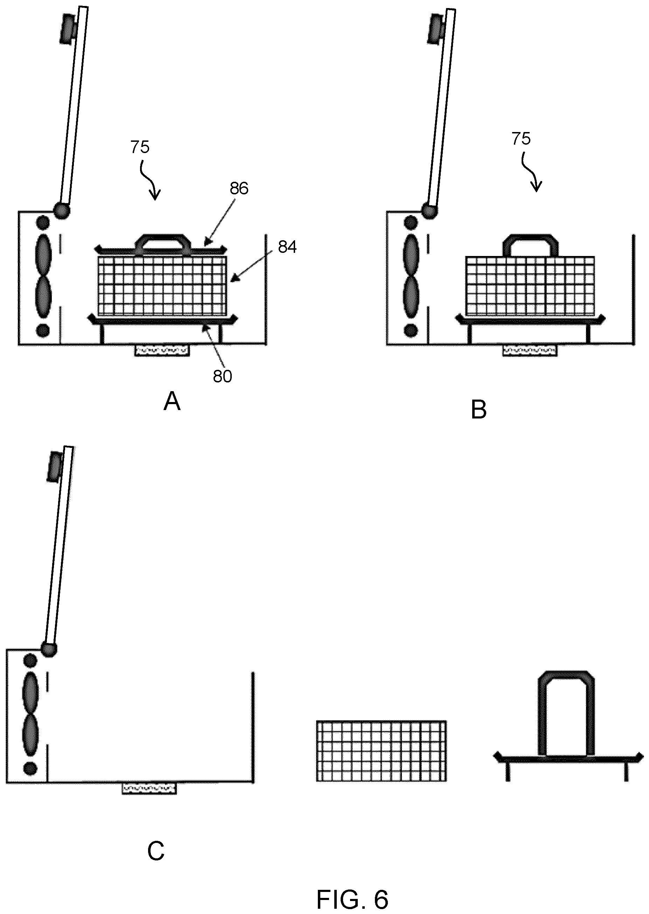

Figure 6 shows some possible configurations of the food support 75. Figure 6A shows the full food support in the cooking chamber and with the lid of the device opened. Figure 6B shows that the lid plate 86 alone may be lifted out by its handles 90b.

Figure 6C shows the cooking chamber emptied with the basket and base (with its handles) separated.

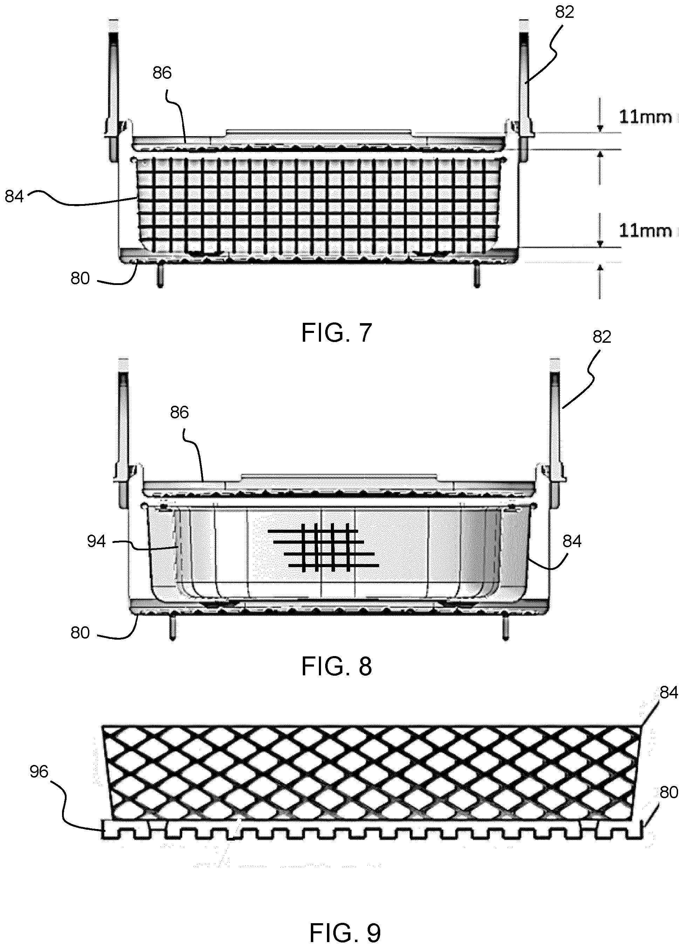

Figure 7 shows the combination of the base 80, basket 84 and lid plate 86. It shows that in this example the bottom of the basket 84 is at a maximum height above the underside of the base of 11mm. The top of the lid plate 86 is a maximum height above the top of the basket of 11mm. The lid plate may instead be sunk below the top of the basket, so that the basket can have a maximal volume.

Figure 8 shows the combination of the base 80, basket 84, lid plate 86 and the pot 94. The pot fits inside the basket. This may be a storage configuration (but the handles may then also be folded flat). In use, the basket is not needed if cooking in the pot.

The base 80 for example has channels and a surrounding rim so that grease can be caught, thus reducing the needed cleaning of the cooking chamber. However, the surrounding rim height should be kept small to avoid disturbing the air flow.

Figure 9 shows the channeled base 80 supporting basket 84. The base has a rim 96 and the bottom of the basket is level with (or below) the top of the rim 96 to collect grease from the basket.

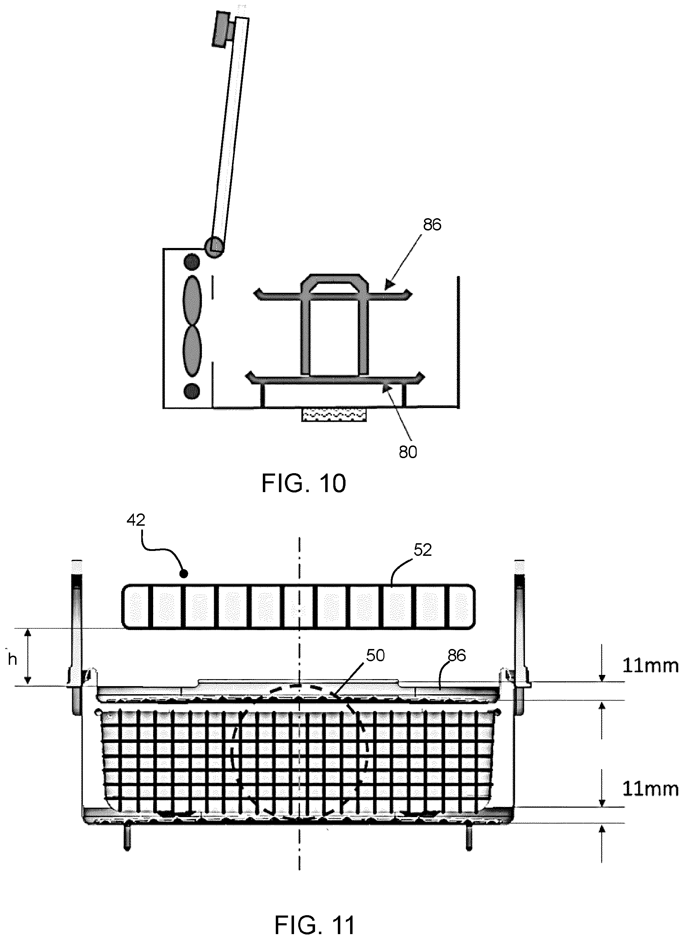

Figure 10 shows that the base 80 and the lid plate 86 may be used without the basket.

As mentioned above, the lid plate 86 may be used for browning. To achieve efficient gentle browning, the lid plate may be mounted close to the delivery vent 52. However, the lid plate 86 when loaded with second food items should not disturb the efficient flow of air and steam which has to penetrate the basket and access the steam generation area.

The lid plate could have an at least partly perforated surface to provide drip off of liquid into the basket, through the basket (e.g. at circumferential section) or directly into the capture space. Some recipes may use nutrients or flavor from food cooked at the lid to enrich the food cooked in the basket or pot or at the support tray at the base. Also the extraction vent 50 should not be covered, to enable efficient flow.

Figure 11 shows a view of the food support and the rear wall area 42. It shows that the top of the lid plate 86 is below the bottom of the delivery vent 52 by a spacing h. This spacing is for example at least 15mm, for example at least 20mm, for example 26mm. It may be larger, for example 45mm. Figure 11 also shows that the delivery vent 52 may be formed as an array of vent sections. Many more examples of possible vent designs are described in WO 2020/148187.

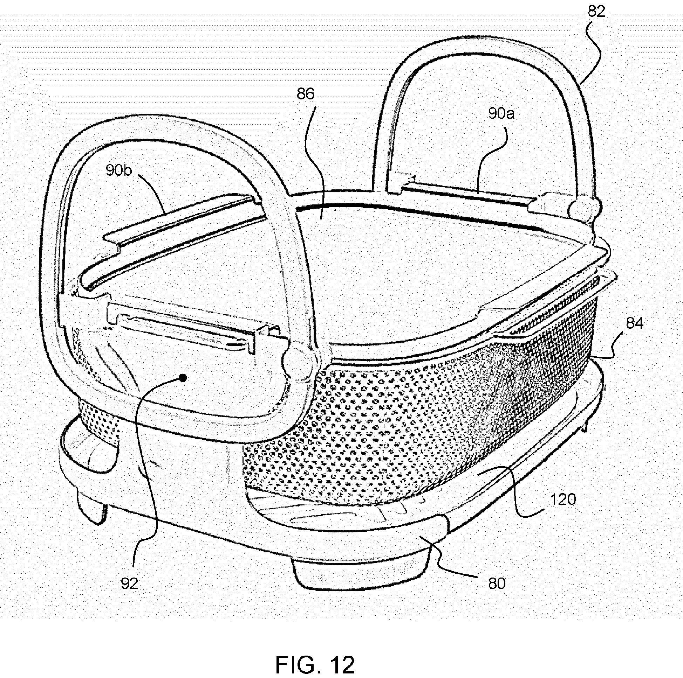

Figure 12 shows a second example of a food support.

The same components are given the same references as for the first example.

The difference is that the base 80 is deeper and serves as an oil collector rather than only a flat support with a shallow rim. A support tray 120 is suspended over the base 80 and it has openings to allow oil to drip through to be caught by the base, which now functions as a drip tray. The support tray 120 may directly support the first food items, or it may function as the support for the basket 84 or the pot as in the example above. The basket or pot may instead be supported directly by the base without the support tray. In this case the oil drips into the base directly. However, providing the basket on the support tray allows the first food items in the basket to drip oil for collection in the base, and the bottom of the basket will not sit in that oil.

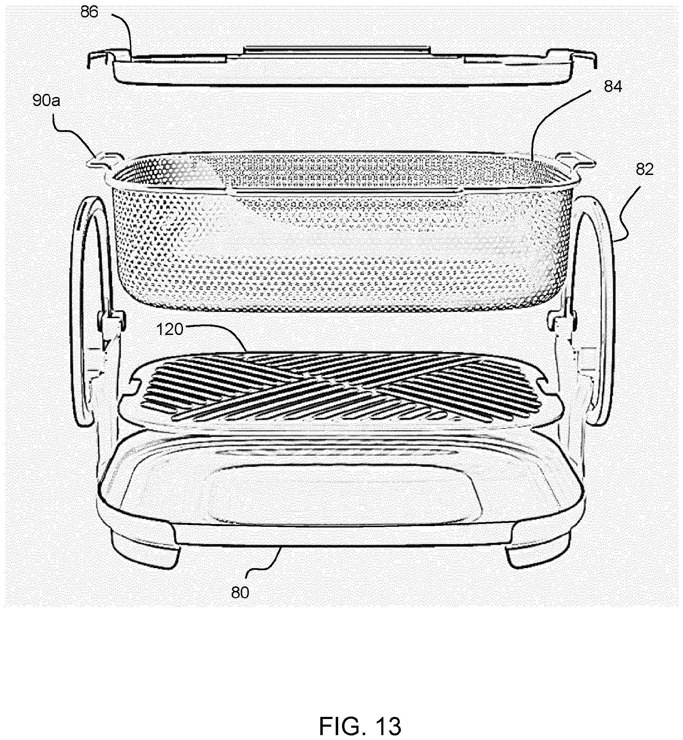

Figure 13 shows the food support of Figure 12 with the different parts separated.

As in the example above, the different part may be used in various combinations, such as:
only the base 80 (for cooking only first food items which can sit directly on the base and do not drip oil);
only the base 80 and support tray (for cooking only first food items which can drip oil);
only the base (with or without the support tray) and basket (for cooking only first food items which are to be retained in a basket). If the basket has only a small height and is suspended from a top section of the base, there may also be space for food items at the support tray as well as in the basket. Typically, when the basket is used, the support tray is not used, because the support tray it is mainly a food support, and this enables a maximum size of the basket.
only the base and top plate (for cooking first food items and second food items or for cooking only second food items);
only the base, support tray and top plate (for cooking dripping first food items and second food items);
only the base (with or without the support tray) and pot for cooking only liquid first food items with an open pot). If the pot has only a small height and is suspended from a top section of the base, space may again be provide for food items at the support tray as well as in the pot;
the base (with or without the support tray), pot and top plate (for cooking liquid first food items in a closed pot and optionally also second food items). As explained above, there may be third food items on the support tray beneath the pot;
the base (with or without the support tray), basket and top plate (for cooking first food items which could fly off under the airflow, and hence are preferably contained within the basket, and optionally second food items).

In the example described above, the handles extend automatically, and they are retracted by closing the lid.

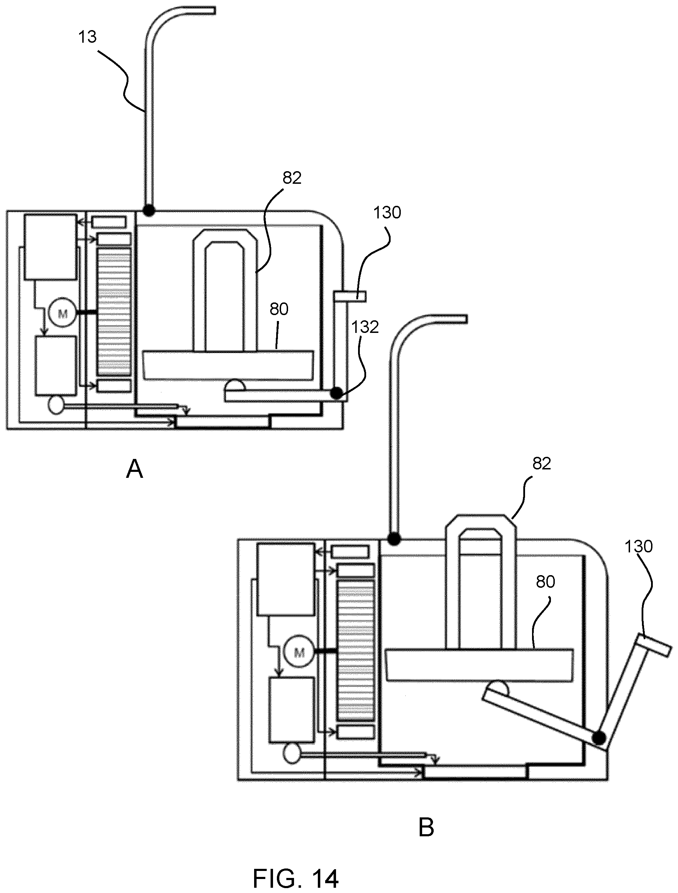

Figure 14 shows a first possible alternative arrangement for the handles of the food support.

In this example, the handles 82 have a height such that they fit in the cooking chamber. To avoid the need for the user to delve into the cooking chamber, a lifting mechanism comprising a lever 130 and pivot 132 is provided. The lever lifts the food support from beneath. Figure 14A shows the non-lifted configuration and Figure 14B shows the lifted configuration.

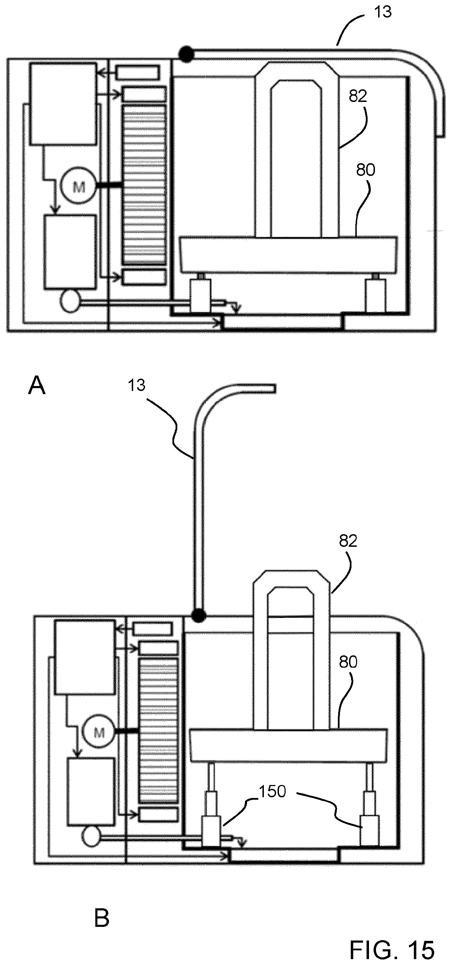

Figure 15 shows a second possible alternative arrangement for the handles of the food support. The handles 82 again have a height such that they fit in the cooking chamber. To avoid the need for the user to delve into the cooking chamber, the base of the food support has a spring loaded lifting mechanism 150 in the form of spring loaded extending feet. The feet lift the food support from beneath. Figure 15A shows the non-lifted configuration with the lid closed and Figure 15B shows the lifted configuration which happens automatically when the lid is opened..

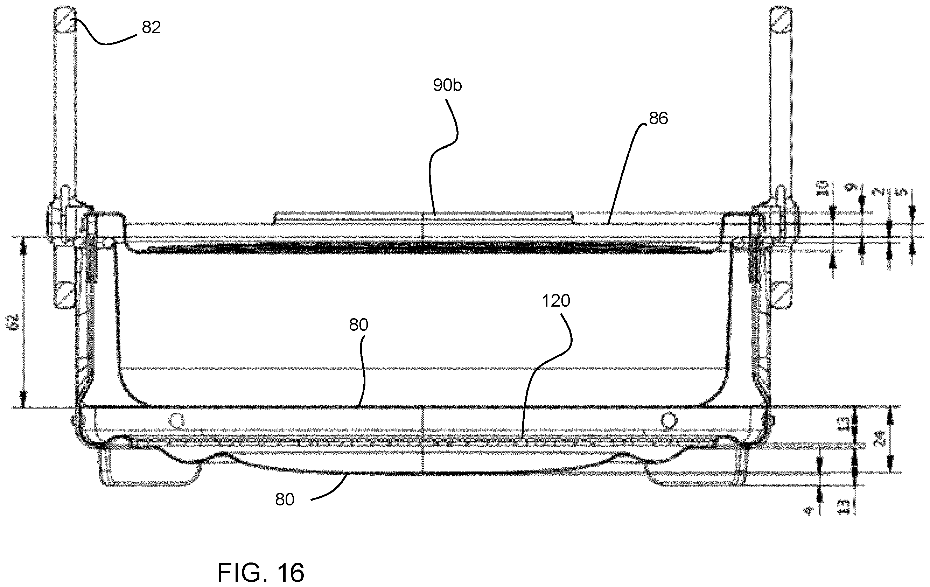

Figure 16 shows example dimensions for the food support of Figure 12. The base has a maximum depth of 24mm. A minimum clearance beneath the base 80 is 4mm. The support tray 120 sits roughly half way into the depth of the base, 13mm below the top rim of the base 80. The underside of the lid pate 86 is 62mm above the top of the base.

These are of course only exemplary dimension, and they are simply to show the general scale of the food support.

The examples above make use of a heater for generating steam within the cooking chamber, However, the steam generation may instead take place in the heating chamber, or the steam generation may be external to the main body of the steam cooker, with steam delivered by a delivery tube.

The examples above also show a fan in the heating chamber. The fan may instead be in the cooking chamber, or alternative methods may be used for generating the desired circulatory flow so that the heater steam laden air circulates around the cooking chamber.

The examples above have the basket (and/or pot) sitting on a base. However, the basket may be received directly in the cooking chamber. The basket may for example be mounted to sidewalls of the cooking chamber or it may hang down from an upper edge of the cooking chamber or the lid, with hooks. Similarly, even where there is a base, the base does not need to sit on the base of the cooking chamber. It may instead again hang down from the top of the cooking chamber or lid, or be supported be the side walls.

As discussed above, embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A steam cooking apparatus (10), comprising:
a cooking chamber (12);
a steam generator for generating steam to be provided to the cooking chamber (12);
a heating chamber (45) adjacent the cooking chamber;
a heating arrangement (18) located within the heating chamber (45) for heating air laden with steam;
a vent arrangement (50,52,54,56) between the cooking chamber (12) and the heating chamber (45) to allow a circulatory flow of steam laden air between the heating chamber and the cooking chamber; and
a food support (75) for mounting in the cooking chamber, wherein the food support comprises:
a basket (84) having perforated sides to allow air to flow through the basket, for containing first food items to be cooked; and
a plate (86) for mounting over the basket, wherein the plate is for supporting second food items to be cooked.

2. The apparatus of claim 1, wherein the food support further comprises a base on which the basket can be mounted.

3. The apparatus of claim 2, wherein the base comprises a capture tray and a support tray mounted spaced over the capture tray.

4. The apparatus of claim 2 or 3, wherein the food support (75) further comprises a non-perforated pot (94) for mounting directly on the base or within the basket (84).

5. The apparatus of claim 4 wherein the food support is configurable with:
only the base;
only the base and basket;
only the base and top plate;
only the base and pot;
the base, pot and top plate.

6. The apparatus of any one of claims 1 to 5, wherein the steam generator comprises a water reservoir and a steam heater within the cooking chamber for heating water from the water reservoir to generate steam.

7. The apparatus of any one of claims 1 to 6, wherein the basket (84) is formed as a mesh.

8. The apparatus of any one of claims 1 to 7, wherein the food support further comprises a handle arrangement for lifting the food support in and out of the cooking chamber.

9. The apparatus of claim 8, wherein the handle arrangement (82) is retractable.

10. The apparatus of any one of claims 1 to 9, wherein the lid plate (86) has handles (90) to enable lifting of the lid plate off the remainder of the food support.

11. The apparatus of any one of claims 1 to 10, wherein the cooking chamber (12) comprises a base (40), a rear wall area (42) and a front wall area (44), wherein the vent arrangement comprises an extraction vent (50) in the rear wall area through which air is drawn from inside the cooking chamber, and a delivery vent (52) in the rear wall area for delivering air to the cooking chamber.

12. The apparatus of claim 11, wherein the extraction vent (50) is located in a middle region of the rear wall area and leads directly to the a (24) and the delivery vent (52) is located at a top region of the rear wall area (42) above the extraction vent (50).

13. The apparatus of claim 12, wherein the top of the lid plate, when the food support is mounted in the cooking chamber (12), is below the bottom of the delivery vent (52).

14. The apparatus of claim 13, wherein the top of the lid plate is spaced by at least 15mm below the bottom of the delivery vent (52), for example by at least 20mm.

15. A food support for use as the food support of the steam cooking apparatus of any one of claims 1 to 14, for mounting in the cooking chamber of the steam cooking apparatus, wherein the food support comprises:
a basket having perforated sides to allow air to flow through, the basket for containing first food items to be cooked; and
a lid plate for mounting over the basket, wherein the lid plate for supporting second items to be cooked.
